# EUROPÄISCHE PATENTANMELDUNG

(11) **EP 3 747 588 A1**
(43) Veröffentlichungstag der Anmeldung: **09.12.2020**
(21) Anmeldenummer: 19179047.6
(22) Anmeldetag: 07.06.2019
(51) Int. Cl.: B23K 26/046

(54) **BEARBEITUNGSVORRICHTUNG ZUR LASERBEARBEITUNG EINES WERKSTÜCKS UND VERFAHREN ZUR LASERBEARBEITUNG EINES WERKSTÜCKS**

(71) Anmelder: Bystronic Laser AG, 3362 Niederönz (CH)
(72) Erfinder: Scheidiger, Simon, 4900 Langenthal (CH); Luedi, Andreas, 3400 Burgdorf (CH); Berger, Michael, 3005 Bern (CH); Mumenthaler, Martin, 4938 Rohrbach (CH)
(74) Vertreter: Patentanwälte Geyer, Fehners & Partner mbB

(57) **Zusammenfassung**

Es wird eine Bearbeitungsvorrichtung zur Laserbearbeitung eines Werkstücks in einer Bearbeitungszone bereitgestellt, mit einer Schnittstelle für eine Bearbeitungslaserquelle zum Erzeugen eines Bearbeitungslaserstrahls mit einer Ausbreitungsrichtung; einer Austrittsöffnung für den Bearbeitungslaserstrahl; und einem optischen System zwischen der Schnittstelle und der Austrittsöffnung, wobei das optische System aufweist: mindestens eine die Brennweite des optischen Systems einstellende optische Einheit, und mindestens eine ortsfeste Laserstrahlführungseinrichtung mit mindestens einer beweglichen Oberfläche, wobei die mindestens eine bewegliche Oberfläche derart verstellbar ist, dass sie in mindestens einem Betriebsmodus die Brennweite des optischen Systems und/oder das Strahlparameterprodukt des zeitlich integrierten Bearbeitungslaserstrahls modifiziert. Es wird ferner ein Verfahren zur Laserbearbeitung eines Werkstücks bereitgestellt.

## Beschreibung

Die vorliegende Erfindung betrifft eine Bearbeitungsvorrichtung zur Laserbearbeitung eines Werkstücks, eine Verwendung einer Bearbeitungsvorrichtung zur Laserbearbeitung eines Werkstücks und ein Verfahren zur Laserbearbeitung eines Werkstücks.

Bei der Laserbearbeitung von Werkstücken, insbesondere bei Verfahren zum thermischen Trennen von Werkstoffen mittels Laserstrahlung, wie Laserschneiden, werden Laserbearbeitungsvorrichtungen eingesetzt. In vielen Fällen wird dabei ein Laserbearbeitungskopf genutzt, der den Bearbeitungslaserstrahl auf das Werkstück führt, beispielsweise auf ein zu bearbeitendes Blech. Beispielsweise bei Flachbettschneidanlagen wird das Werkstück mit einem Laserstrahl und einem Gasstrahl bearbeitet. Der Bearbeitungskopf ist als Schneidkopf ausgeführt und leitet die beiden Strahlen in optimaler Ausprägung auf das Werkstück. Je nach Werkstück (Material und Dicke) und gewünschtem Prozess kann ein unterschiedlicher Laserstrahl optimal sein.

Die meisten verfügbaren Schneidköpfe für mittlere Laserleistungen von über 1kW haben eine unveränderbare optische Abbildung des Laserstrahles auf dem zu bearbeitenden Werkstück. Diese Abbildung stellt einen Kompromiss dar. Der Strahl kann zwar für unterschiedliche Materialien, sowie für dünne wie dicke Werkstücke eingesetzt werden. Hingegen geht eine starre optische Abbildung des Laserstrahls für die meisten Materialien und Dicken mit Einbussen in Schnittqualität und/oder Vorschub einher.

In den letzten Jahren wurden daher Zoom-Optiken für die Laserbearbeitung entwickelt und in Schneidköpfen eingesetzt. Mit diesen kann das Abbildungsverhältnis, d.h. die Brennweite der Optik, in einem gewissen Bereich verändert werden, insbesondere in Abhängigkeit von der Art und Dicke des Werkstücks. In einer Zoom-Optik können typischerweise mindestens zwei optische Elemente derart eingestellt werden, dass die Lage des Fokus des Bearbeitungslaserstrahls parallel zu dessen Ausbreitungsrichtung verschoben wird.

Es existieren Ansätze für die Laserbearbeitung, bei welchen Strahlformung des Laserstrahls betrieben wird. Unter Strahlformung kann das Verändern des Strahlparameterprodukts des Laserstrahls und/oder das Verändern des Gemisches der elektromagnetischen Lasermoden und/oder das Variieren der transversalen Verteilung der Leistung des Laserstrahls verstanden werden. Es gibt statische Strahlformung, bei dem das Strahlparameterprodukt zu einem oder mehreren singulären (vereinzelten) Zeitpunkten verstellt wird, wie in EP3412400 A1 beschrieben. Daneben gibt es auch dynamische Strahlformung (Dynamic Beam Shaping DBS), bei dem das Strahlparameterprodukt durch kontinuierliche dynamische Bewegung des Laserstrahls über eine Zeitperiode gemittelt oder integriert verändert wird, zum Beispiel durch Strahlpendeln. DE102008053397 B4 offenbart beispielsweise ein Verfahren zum Schmelzschneiden von Werkstücken mit Laserstrahlung, bei dem der Neigungswinkel der Schneidfront permanent durch eine der Vorschubbewegung überlagerte Bewegung des Brennpunktes des Laserstrahls so verändert wird, dass der Einfallswinkel des Laserstrahls innerhalb eines Intervalls um den Brewster-Winkel gehalten wird.

Bei der Laserbearbeitung unter Einsatz der dynamischen Strahlformung wird der Laserstrahl mit Frequenzen von z.B. 100 Hz bis 10 kHz über das zu bearbeitende Werkstück bewegt, d.h. mit Frequenzen, die deutlich höher sind, als die typische Reaktionszeit zwischen Laserstrahl und Material. Somit wird das Werkstück mit einer zeitlich gemittelten oder zeitlich integrierten Leistungsverteilung des Bearbeitungslaserstrahls bearbeitet. Mittels dynamischer Strahlformung können somit nahezu beliebige Leistungsverteilungen und Intensitätsverteilungen des Laserstrahlspots erzeugt werden. Vorteile beim Laserschneiden mit dynamischer Strahlformung wurden z.B. durch IWS, Fraunhofer gezeigt, vgl. https://www.iws.fraunhofer.de/ content/dam/iws/en/documents/publications/annual_report_articl es/2015/JB-IWS-2015-en-S86-87.pdf.

Für die Strahlformung von Laserstrahlen können adaptive Spiegel eingesetzt werden, wie z.B. verfügbar von AOS oder IOF. Sind Oberflächenbereiche des Spiegels unabhängig voneinander schnell verstellbar, z.B. mit Frequenzen von mehr als 100 Hz, kann mit solchen Spiegeln sowohl statische wie auch dynamische Strahlformung betrieben werden. Dies wird z.B. in WO2018007967 A1 beschrieben.

Aufgabe der Erfindung ist es, eine Bearbeitungsvorrichtung und ein Verfahren zur Laserbearbeitung eines Werkstücks anzugeben, die eine Funktion der Brennweitenänderung, insbesondere eine Zoomfunktion, für den Bearbeitungslaserstrahl und eine Strahlformung des Bearbeitungslaserstrahls bereitstellen.

Diese Aufgabe wird gelöst durch eine Bearbeitungsvorrichtung zur Laserbearbeitung eines Werkstücks nach Anspruch 1, eine Verwendung einer Bearbeitungsvorrichtung nach Anspruch 13 und ein Verfahren zur Laserbearbeitung eines Werkstücks nach Anspruch 14.

In einer Ausführungsform der Erfindung wird eine Bearbeitungsvorrichtung zur Laserbearbeitung eines Werkstücks in einer Bearbeitungszone, insbesondere zum Laserschneiden, insbesondere Laserbearbeitungskopf, bereitgestellt, mit einer Schnittstelle für eine Bearbeitungslaserquelle zum Erzeugen eines Bearbeitungslaserstrahls mit einer Ausbreitungsrichtung; einer Austrittsöffnung für den Bearbeitungslaserstrahl; und einem optischen System zwischen der Schnittstelle und der Austrittsöffnung, wobei das optische System aufweist: mindestens eine die Brennweite des optischen Systems einstellende optische Einheit, und mindestens eine ortsfeste Laserstrahlführungseinrichtung mit mindestens einer beweglichen Oberfläche, wobei die mindestens eine bewegliche Oberfläche derart verstellbar ist, dass sie in mindestens einem Betriebsmodus die Brennweite des optischen Systems und/oder das Strahlparameterprodukt des zeitlich integrierten Bearbeitungslaserstrahls modifiziert.

In der Bearbeitungsvorrichtung kann aufgrund der ortsfesten Laserstrahlführungseinrichtung mit mindestens einer beweglichen Oberfläche die Funktion der Brennweitenänderung, z.B. eine Zoomfunktion, und die Strahlformungsfunktion mit einem einzigen Bauteil bewerkstelligt werden. Dadurch kann mindestens ein Betriebsmodus realisiert werden, bei dem die Funktion der Brennweitenänderung und/oder die Strahlformungsfunktion eingesetzt werden. Dafür ist die mindestens eine bewegliche Oberfläche derart verstellbar, dass sie die Brennweite des optischen Systems und/oder das Strahlparameterprodukt des zeitlich integrierten Bearbeitungslaserstrahls modifiziert. In zusätzlichen Betriebsmodi kann entweder die Funktion der Brennweitenänderung oder die Strahlformungsfunktion eingesetzt werden. Dafür ist die mindestens eine bewegliche Oberfläche derart verstellbar, dass sie die Brennweite des optischen Systems oder das Strahlparameterprodukt des zeitlich integrierten Bearbeitungslaserstrahls modifiziert. Für weitere zusätzliche Betriebsmodi ist die mindestens eine bewegliche Oberfläche derart verstellbar, dass sie weder die Brennweite noch das Strahlparameterprodukt des zeitlich integrierten Bearbeitungslaserstrahls modifiziert. Dafür kann die mindestens eine bewegliche Oberfläche derart verstellbar sein, dass der Bearbeitungslaserstrahl lediglich zur Austrittsöffnung geleitet, z.B. umgelenkt, wird.

Mit der mindestens einen beweglichen Oberfläche kann das Strahlparameterprodukt des zeitlich integrierten Bearbeitungslaserstrahls modifiziert werden. Dies bedeutet, wenn die bewegliche Oberfläche nur räumlich verstellt wird, kann das Strahlparameterprodukt eingestellt und eine statische Strahlformung des Bearbeitungslaserstrahls durchgeführt werden. Wird die bewegliche Oberfläche nicht nur räumlich sondern auch zeitlich verstellt, d.h. im Verlauf eines oder mehrerer Zeiträume, kann das Strahlparameterprodukt eingestellt oder variiert werden, und eine dynamische Strahlformung des Bearbeitungslaserstrahls wird ermöglicht. Auf diese Weise können nahezu beliebige Intensitätsverteilungen des Strahlspots und Strahlparameterprodukte des Bearbeitungslaserstrahls bereitgestellt werden. Ferner kann, da die Funktion der Brennweitenänderung (Zoomfunktion) und die Funktionen der statischen und/oder dynamischen Strahlformung in einem einzigen Bauteil implementiert sind, eine platzsparende Anordnung des Strahlengangs des Bearbeitungslaserstrahls realisiert werden. Zudem ist es für die Bereitstellung der Funktion der Brennweitenänderung und der Funktionen der statischen und/oder dynamischen Strahlformung nicht erforderlich, die gesamte Laserstrahlführungseinrichtung zu bewegen oder zu verschieben. Sie kann daher ortsfest in der Bearbeitungsvorrichtung vorgesehen sein. Des Weiteren ist die Bearbeitungsvorrichtung, auch wenn sie als Bearbeitungskopf ausgeführt ist, für Leistungen des Bearbeitungslaserstrahls bis 4 kW und darüber hinaus einsetzbar.

In Ausführungsformen der Bearbeitungsvorrichtung kann die mindestens eine bewegliche Oberfläche mittels mindestens einer Bewegungseinrichtung verstellbar sein. Dadurch kann der Bearbeitungslaserstrahl zumindest parallel und/oder senkrecht zu seiner Ausbreitungsrichtung bewegt und/oder geformt werden. Ferner kann die mindestens eine bewegliche Oberfläche eine Oberflächeneinheit der Laserstrahlführungseinrichtung bereitstellen, deren Oberflächengeometrie, insbesondere deren Krümmung, verstellbar ist. Dadurch kann nicht nur die Divergenz des Bearbeitungslaserstrahls verändert und/oder die Fokuslage des Bearbeitungslaserstrahls parallel zu dessen Ausbreitungsrichtung verschoben werden, sondern der Bearbeitungslaserstrahl kann auch zumindest senkrecht zu seiner Ausbreitungsrichtung geformt und/oder bewegt werden. Die mindestens eine bewegliche Oberfläche kann des Weiteren dynamisch verstellbar sein. Diese ermöglicht die dynamische Strahlformung des Bearbeitungslaserstrahls.

Die Laserstrahlführungseinrichtung von Ausführungsformen kann eine Mehrzahl von dynamisch orientierbaren Oberflächen aufweisen. Alternativ kann die Laserstrahlführungseinrichtung eine kontinuierliche Oberfläche aufweisen, die dynamisch verformbar ist.

Die mindestens eine bewegliche Oberfläche kann für den Bearbeitungslaserstrahl zumindest teilweise reflektierend sein und/oder derart in der Bearbeitungsvorrichtung angeordnet sein, dass der Bearbeitungslaserstrahl umgelenkt wird. In einer Ausführungsform kann die Laserstrahlführungseinrichtung mindestens einen Segmentspiegel mit mehreren Spiegelsegmenten, die jeweils orientierbar sind, aufweisen. Gemäß einer weiteren Ausführungsform kann die Laserstrahlführungseinrichtung mindestens einen verformbaren Spiegel aufweisen. Auch mit diesen Ausführungsformen kann daher nicht nur eine statische Strahlformung und/oder eine hoch flexible dynamische Strahlformung des Bearbeitungslaserstrahls zumindest senkrecht zu seiner Ausbreitungsrichtung bewirkt werden. Es kann auch eine Verstellung der Lage des Fokus des Laserstrahls parallel zu seiner Ausbreitungsrichtung realisiert werden, insbesondere eine Modifikation der Brennweite des optischen Systems der Bearbeitungsvorrichtung, z.B. eine Zoomfunktion.

Die Laserstrahlführungseinrichtung kann mindestens ein Element ausgewählt aus einem mit mindestens einem Piezo-Aktuator verstellbaren Spiegel, einem bimorph deformierbaren Spiegel, einem auf MEMS-Basis deformierbaren Spiegel und einem auf Schwingspulen-Basis deformierbaren Spiegel als verformbare Spiegel aufweisen.

Ferner kann die Laserstrahlführungseinrichtung, insbesondere die mindestens eine bewegliche Oberfläche, derart angeordnet und ausgebildet sein, dass der Bearbeitungslaserstrahl in einem Winkel kleiner, gleich oder größer 90° umgelenkt wird. Dies ermöglicht eine flexible räumliche Konfiguration der Bearbeitungsvorrichtung.

In weiteren Ausführungsformen kann die Bewegungseinrichtung mindestens ein Element ausgewählt aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einer Mehrzahl davon und/oder einer Kombination davon aufweisen. Dies ermöglicht eine hochvariable Bewegung und/oder eine hochfrequente dynamische Bewegung des Bearbeitungslaserstrahls.

Gemäß Ausführungsformen der Bearbeitungsvorrichtung kann die optische Einheit ausgewählt sein aus einer Linse, einer Fokussierlinse, einer Kollimationslinse, einer weiteren der mindestens einen Laserstrahlführungseinrichtung, einem adaptiven Spiegel, einer Mehrzahl davon und/oder einer Kombination davon. Als adaptiver Spiegel kann ein einfacher adaptiver Spiegel dienen, der lediglich die Brennweite, z.B. mittels seinem Krümmungsradius, verändern kann. Die optische Einheit kann parallel zur Ausbreitungsrichtung verschiebbar sein, z.B. wenn sie als transmissives optisches Element ausgebildet ist. Alternativ kann die optische Einheit ortsfest sein, z.B. wenn sie als reflektives optisches Element ausgebildet ist, dessen reflektierende Oberfläche beweglich ist. Damit kann die Brennweite des optischen Systems variiert werden.

Außerdem kann die mindestens eine optische Einheit in Ausbreitungsrichtung vor und/oder hinter der Laserstrahlführungseinrichtung angeordnet sein. Dabei kann z.B. die Fokussierlinse in Ausbreitungsrichtung hinter der Laserstrahlführungseinrichtung angeordnet sein und/oder die Kollimationslinse kann in Ausbreitungsrichtung vor der Laserstrahlführungseinrichtung angeordnet sein.

In der Bearbeitungsvorrichtung kann die Schnittstelle mit einer Bearbeitungslaserquelle zum Erzeugen eines Bearbeitungslaserstrahls verbunden oder versehen sein. Die Bearbeitungslaserquelle kann eine Laserleistung von mindestens 1 kW, bevorzugt mindestens 4 kW, bevorzugter zwischen 1 bis 30 kW, am meisten bevorzugt zwischen 1 bis 25 kW, bereitstellen. Ferner kann in der Bearbeitungsvorrichtung eine Steuerungseinheit zum Steuern der optischen Einheit und/oder der Laserstrahlführungseinrichtung, insbesondere der Bewegungseinrichtung, vorgesehen sein.

Gemäß Ausführungsformen der Bearbeitungsvorrichtung kann die mindesten eine bewegliche Oberfläche mit einer Frequenz zwischen 10 Hz und 15 kHz, bevorzugt zwischen 100 Hz und 10 kHz, verstellbar sein. Dadurch kann eine hochfrequente dynamische Bewegung der Oberfläche und dadurch eine hochfrequente dynamische Bewegung des Bearbeitungslaserstrahls, z.B. ein Strahlpendeln oder eine Fokalpunkt-Oszillation des Bearbeitungslaserstrahls, erzeugt werden. Ferner kann die mindestens eine bewegliche Oberfläche derart verstellbar sein, dass sie den Bearbeitungslaserstrahl zumindest senkrecht zur Ausbreitungsrichtung dynamisch bewegt. Die mindestens eine bewegliche Oberfläche kann dabei derart verstellbar sein, dass sie den Bearbeitungslaserstrahl dynamisch bewegt und mindestens eine Fokalpunkt-Oszillation mit mindestens einer Schwingungsamplitude und mindestens einer Schwingungsfrequenz und mit einem Fokalpunkt-Oszillationsweg erzeugt, der einer zwei- oder drei-dimensionalen Lissajous-Figur oder einer Kombination von zwei- oder drei-dimensionalen Lissajous-Figuren entspricht.

Eine weitere Ausführungsform gibt eine Verwendung einer Bearbeitungsvorrichtung nach einer der vorstehenden Ausführungsformen zur Laserbearbeitung eines Werkstücks, insbesondere zum Laserschneiden, an.

Eine andere Ausführungsform betrifft ein Verfahren zur Laserbearbeitung eines Werkstücks mit einer Bearbeitungsvorrichtung nach einer der vorstehenden Ausführungsformen, insbesondere zum Laserschneiden, umfassend: Bestrahlen einer Bearbeitungszone eines Werkstücks mit einem Bearbeitungslaserstrahl aus einer Bearbeitungslaserquelle, die an der Schnittstelle der Bearbeitungsvorrichtung vorgesehen ist, durch die Austrittsöffnung der Bearbeitungsvorrichtung; und Modifizieren der Brennweite des optischen Systems und/oder des Strahlparameterprodukts des zeitlich integrierten Bearbeitungslaserstrahls mittels der Laserstrahlführungseinrichtung, die mindestens eine bewegliche Oberfläche aufweist.

In dem Verfahren kann die Laserstrahlführungseinrichtung, insbesondere die mindestens eine bewegliche Oberfläche, zum Modifizieren des Strahlparameterprodukts den Bearbeitungslaserstrahl zumindest senkrecht zur Ausbreitungsrichtung dynamisch bewegen. Dadurch kann eine Fokalpunkt-Oszillation erzeugt werden. Ferner kann die Laserstrahlführungseinrichtung, insbesondere die mindestens eine bewegliche Oberfläche, zum Modifizieren des Strahlparameterprodukts den Bearbeitungslaserstrahl dynamisch bewegen und mindestens eine Fokalpunkt-Oszillation mit mindestens einer Schwingungsamplitude und mindestens einer Schwingungsfrequenz und mit einem Fokalpunkt-Oszillationsweg erzeugen, der einer zwei- oder drei-dimensionalen Lissajous-Figur oder einer Kombination von zwei- oder drei-dimensionalen Lissajous-Figuren entspricht.

Mit den Verfahren zur Laserbearbeitung eines Werkstücks der vorstehenden Ausführungsformen können die gleichen Vorteile, Betriebsmodi und Funktionen realisiert werden, wie mit den Ausführungsformen der Bearbeitungsvorrichtung zur Laserbearbeitung eines Werkstücks, insbesondere mit gleichlautenden und/oder analogen Merkmalen.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Gleiche Elemente der Ausführungsformen sind in der folgenden Beschreibung mit den gleichen Bezugszeichen versehen. Einzelne oder mehrere Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
- Fig. 1: schematisch eine Bearbeitungsvorrichtung 100 zur Laserbearbeitung eines Werkstücks als ein erstes Beispiel gemäß Ausführungsformen der Erfindung;
- Fig. 2: schematisch eine Bearbeitungsvorrichtung 200 zur Laserbearbeitung eines Werkstücks als ein zweites Beispiel gemäß Ausführungsformen der Erfindung;
- Fig. 3: schematisch eine Bearbeitungsvorrichtung 300 zur Laserbearbeitung eines Werkstücks als ein drittes Beispiel gemäß Ausführungsformen der Erfindung; und
- Fig. 4: schematisch eine Bearbeitungsvorrichtung 400 zur Laserbearbeitung eines Werkstücks als ein viertes Beispiel gemäß Ausführungsformen der Erfindung.

### Beispiele

Im Folgenden wird die Bearbeitungsvorrichtung gemäß Ausführungsformen der Erfindung unter anderem anhand von Beispielen mit Bearbeitungskopf beschrieben, ohne die Erfindung darauf zu begrenzen. Die Bearbeitungsvorrichtung und das Verfahren gemäß Ausführungsformen der Erfindung können auch ohne Bearbeitungskopf realisiert sein/werden.

Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

Der Begriff "zeitlich integriert" oder "zeitlich gemittelt" bedeutet vorliegend über einen Zeitraum oder eine Zeitperiode integriert oder gemittelt. Im Zusammenhang mit einer Fokalpunkt-Oszillation bedeutet dies über mindestens eine Oszillationsperiode integriert oder gemittelt, in Verbindung mit einem Strahlpendeln über mindestens eine Pendelperiode integriert oder gemittelt.

Die Begriffe "dynamische Bewegung" des Laserstrahls oder "dynamisch bewegter" Laserstrahl und Abwandlungen davon bedeuten vorliegend, dass der Laserstrahl hochfrequent, beispielsweise mit Frequenzen von 10 Hz bis 15 kHz, bewegt wird. Gleiches gilt analog für "dynamisch" bewegbare, orientierbare und/oder verstellbare Elemente der Bearbeitungsvorrichtung.

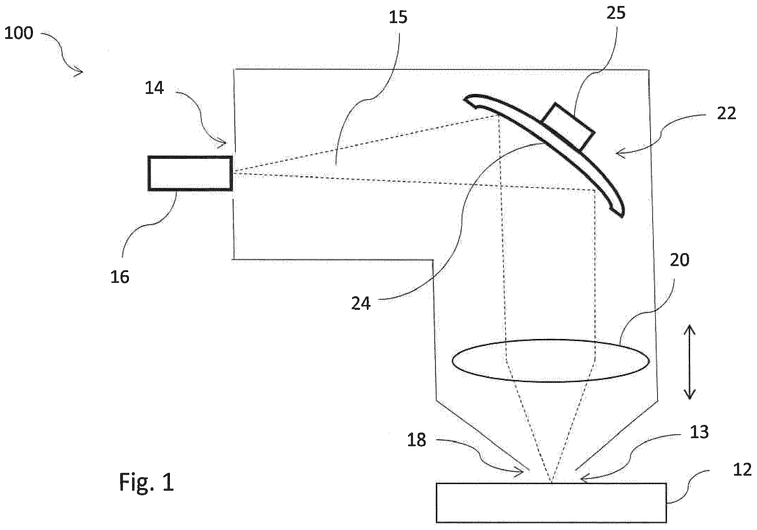

Fig. 1 veranschaulicht schematisch ein erstes Beispiel einer Bearbeitungsvorrichtung 100 gemäß Ausführungsformen der Erfindung zur Laserbearbeitung eines Werkstücks 12 in einer Bearbeitungszone 13.

Die Bearbeitungsvorrichtung 100 besitzt eine erste Schnittstelle 14 für eine Bearbeitungslaserquelle 16 zum Erzeugen eines Bearbeitungslaserstrahls 15, der in Fig. 1 mit gestrichelten Linien als ein Strahlenbündel dargestellt ist. Im vorliegenden Beispiel ist die Bearbeitungsvorrichtung 100 als ein Bearbeitungskopf ausgeführt, und an der ersten Schnittstelle 14 ist zur Ankopplung der Bearbeitungslaserquelle eine Transportfaser der Bearbeitungslaserquelle 16 vorgesehen. In alternativen Beispielen kann die Bearbeitungslaserquelle 16 direkt an der Schnittstelle 14 vorgesehen sein. Die Bearbeitungslaserquelle 16 besitzt in den vorliegenden Beispielen eine Leistung von ungefähr 6 kW und erzeugt den Bearbeitungslaserstrahl in einem Spektralbereich, der eine Wellenlänge von 1070 nm beinhaltet. Es können jedoch auch Bearbeitungslaserquellen mit einer geringeren Leistung als 6 kW, z.B. ca. 1 kW, oder mit einer Leistung größer als 6 kW eingesetzt werden.

Die Bearbeitungsvorrichtung 100 besitzt eine Austrittsöffnung 18 für den Bearbeitungslaserstrahl 15.

Innerhalb der Bearbeitungsvorrichtung 100 befindet sich ein optisches System mit einer optischen Einheit 20 und einer ortsfesten Laserstrahlführungseinrichtung 22.

Die optische Einheit 20 ist im vorliegenden Beispiel transmissiv und im Bereich zwischen der Laserstrahlführungseinrichtung 22 und der Austrittsöffnung 18 angeordnet. Die optische Einheit 20 ist als Fokussierlinse ausgeführt, die parallel zur Ausbreitungsrichtung des Bearbeitungslaserstrahls 15 verschiebbar ist, wie in Fig. 1 durch den Doppelpfeil veranschaulicht ist. Durch Verschieben der Fokussierlinse kann mit der optischen Einheit 20 die Brennweite des optischen Systems eingestellt werden.

Die Laserstrahlführungseinrichtung 22 ist ortsfest im Bereich zwischen der ersten Schnittstelle 14 und der optischen Einheit 20 angeordnet. Im vorliegenden Beispiel besitzt die Laserstrahlführungseinrichtung 22 eine den Bearbeitungslaserstrahl 15 reflektierende Oberfläche 24. Die reflektierende Oberfläche 24 ist derart angeordnet und ausgerichtet, dass sie den Bearbeitungsstrahl 15 zu der optischen Einheit 20 umlenkt. Die reflektierende Oberfläche 24 ist mittels mindestens einer Bewegungseinrichtung 25 zumindest teilweise dynamisch beweglich.

Die Laserstrahlführungseinrichtung 22 weist als reflektierende Oberfläche einen im Wesentlichen kreisförmigen Segmentspiegel eines Durchmessers von ca. 50 mm mit 41 voneinander getrennten, nebeneinander benachbart angeordneten Spiegelsegmenten auf, die ein konzentrisches Muster bilden. Jedes Spiegelsegment besitzt eine Gold-Beschichtung, ist reflektiv für den Bearbeitungslaserstrahl 15 und ist mittels einem Piezo-Aktuator der Bewegungseinrichtung 25 individuell dynamisch orientierbar. Die Piezo-Aktuatoren sind entsprechend dem Muster der Spiegelsegmente angeordnet. Im vorliegenden Beispiel handelt es sich um Piezo-Aktuatoren auf Basis einer modifizierten PZT-Keramik mit einer typischen Betriebsspannung von 120V. Die Laserstrahlführungseinrichtung 22 stellt somit eine den Bearbeitungslaserstrahl 15 reflektierende, segmentierte Gesamtoberfläche bereit, deren Oberflächengeometrie, insbesondere deren Krümmung, hoch dynamisch verstellbar ist.

Die Bewegungseinrichtung 25 beinhaltet also im vorliegenden Beispiel pro Spiegelsegment einen individuell ansteuerbaren Piezo-Aktuator. In anderen Beispielen kann die Bewegungseinrichtung eine Mehrzahl von Elementen enthalten, ausgewählt aus einem Elektromotor, einem pneumatischen Motor, einem Exzenter, einer Vorrichtung zur Erzeugung eines oszillierenden elektromagnetischen Felds, einem MEMS-Oszillator, einer Schwingspule und einem elektrostatisch bewegbaren Aktuator. Auch eine Kombination unterschiedlicher Aktuatoren kann in der Bewegungseinrichtung 25 vorgesehen sein.

Die ortsfeste Laserstrahlführungseinrichtung 22 ist daher derart angeordnet und ausgebildet, dass sie den Bearbeitungslaserstrahl 15 zu der optischen Einheit 20 umlenkt und den Bearbeitungslaserstrahl 15 beispielsweise bei einer Frequenz zwischen 10 Hz und 15 kHz dynamisch bewegt. Zudem ist die Laserstrahlführungseinrichtung 22 im vorliegenden Beispiel derart ausgebildet, dass sie den Bearbeitungslaserstrahl 15 kollimiert.

In einer ersten Anwendung der Bearbeitungsvorrichtung 100 wird die Fokussierlinse der optischen Einheit 20 falls erforderlich parallel zur Ausbreitungsrichtung des Bearbeitungslaserstrahls 15 verschoben, um eine Voreinstellung der Brennweite des optischen Systems vorzunehmen. Der Bearbeitungslaserstrahl 15 wird von der Schnittstelle 14 auf die reflektierende Oberfläche 24 der Laserstrahlführungseinrichtung 22 gerichtet. Die einzelnen Segmente der reflektierenden Oberfläche 24 werden durch die Piezo-Aktuatoren der Bewegungseinrichtung 25 dynamisch mit einer Frequenz zwischen 10 Hz und 15 kHz derart bewegt, dass die Krümmung der Oberfläche 24 hoch dynamisch verstellt wird. Dies kann kontinuierlich über einen oder mehrere Zeiträume erfolgen. Durch die Bewegung der Segmente wird der daran reflektierte Bearbeitungslaserstrahl 15 zumindest senkrecht zu seiner Ausbreitungsrichtung dynamisch bewegt und in Richtung der Fokussierlinse der optischen Einheit 20 umgelenkt. Damit wird eine hoch flexible Strahlformung des Bearbeitungslaserstrahls 15 zumindest senkrecht zu seiner Ausbreitungsrichtung ausgeführt. Dadurch wird eine Fokalpunkt-Oszillation erzeugt. In einem beispielhaften Betrieb wird eine Fokalpunkt-Oszillation mit mindestens einer Schwingungsamplitude und mindestens einer Schwingungsfrequenz und mit einem Fokalpunkt-Oszillationsweg, erzeugt, der einer zwei- oder drei-dimensionalen Lissajous-Figur oder einer Kombination von zwei- oder drei-dimensionalen Lissajous-Figuren entspricht.

Gleichzeitig wird durch die Variation der Krümmung der Oberfläche 24 der Bearbeitungslaserstrahl 15 kollimiert. Auf diese Weise wird die mittels der optischen Einheit 20 eingestellte Brennweite des optischen Systems modifiziert. Der Bearbeitungslaserstrahl 15 wird auf die Fokussierlinse der optischen Einheit 20 umgelenkt, fokussiert und in Richtung der Austrittsöffnung 18 geleitet. Der dynamisch bewegte Bearbeitungslaserstrahl 15 tritt durch die Austrittsöffnung 18 aus und trifft auf die Bearbeitungszone 13 des Werkstücks 12. d.h. mit Frequenzen, die deutlich höher sind, als die typische Reaktionszeit zwischen Laserstrahl und Material.

Dabei werden im Falle des oben genannten beispielhaften Betriebs mit dem Bearbeitungslaserstrahl 15 beliebige Lissajous-Figuren auf dem Werkstück 12 geschrieben. Die Lissajous-Figuren können in einer Datenbank einer Steuerungseinheit der Bearbeitungsvorrichtung gespeichert sein, welche die Piezo-Aktuatoren der Bewegungseinrichtung 25 entsprechend ansteuert. Bei der dynamischen Bewegung des Bearbeitungslaserstrahls 15 wird eine Fokalpunkt-Oszillation mit einer Schwingungsamplitude kleiner oder gleich +/-5 mm mit einer Schwingungsfrequenz zwischen 10 Hz und 15 kHz erzeugt, die einer zwei-dimensionalen Lissajous-Figur oder einer Kombination von zwei-dimensionalen Lissajous-Figuren entspricht. Der Fokalpunkt hat dabei z.B. einen Durchmesser oder eine Größe von mindestens 0,1 mm. In anderen Beispielen kann ein Fokalpunkt mit einem Durchmesser kleiner als 0,1 mm bereitgestellt werden.

Durch die Bewegung der einzelnen Segmente der reflektierenden Oberfläche 24 wird der Bearbeitungslaserstrahl 15 also sowohl parallel als auch senkrecht zu seiner Ausbreitungsrichtung geformt. Auf diese Weise werden die Brennweite des optischen Systems und das Strahlparameterprodukt des zeitlich integrierten, bewegten Bearbeitungslaserstrahls modifiziert. Da die Krümmung der Oberfläche 24 mit Frequenzen zwischen 10 Hz und 15 kHz, also hoch dynamisch kontinuierlich verändert wird, können mittels dynamischer Strahlformung nahezu beliebige Intensitätsverteilungen des Strahlspots und Strahlparameterprodukte des Bearbeitungslaserstrahls 15 bereitgestellt werden. Der Bearbeitungslaserstrahl wird dabei mit Frequenzen bewegt, die deutlich höher sind, als die typische Reaktionszeit zwischen Laserstrahl und Material. Zudem wird die dynamische Bewegung des Laserstrahls durch die bewegliche Oberfläche 24 bewirkt, deren Material für Laserstrahlen hoher Leistungen geeignet ist. Aus diesem Grund ist die Bearbeitungsvorrichtung, auch wenn sie als Bearbeitungskopf ausgeführt ist, für Leistungen des Bearbeitungslasers bis 4 kW und darüber hinaus einsetzbar. Da die Verstellung der Krümmung der Oberfläche 24 auch die Brennweite des optischen Systems modifiziert, wird ferner eine hoch flexible Feineinstellung (Feintuning) der Brennweite ermöglicht.

In einer zweiten Anwendung der Bearbeitungsvorrichtung 100 werden im Unterschied zur ersten Anwendung die Segmente der reflektierenden Oberfläche nicht dynamisch kontinuierlich im Verlauf eines oder mehrerer Zeiträume bewegt. Vielmehr werden die Segmente und damit die Krümmung der Oberfläche 24 zu einem oder mehreren singulären Zeitpunkten derart verstellt, dass der Bearbeitungslaserstrahl 15 kollimiert wird und das Strahlenbündel senkrecht zur Ausbreitungsrichtung statisch unter Einstellung des Strahlparameterproduktes geformt wird. Auf diese Weise werden eine erwünschte Brennweite und eine erwünschte statische Strahlform des Bearbeitungslaserstrahls zu Beginn und/oder zu einzelnen erwünschten Zeitpunkten im Verlauf der Laserbearbeitung eingestellt. Somit werden bei der zweiten Anwendung durch die Laserstrahlführungseinrichtung 22 ebenfalls die Brennweite des optischen Systems und das Strahlparameterprodukt des zeitlich integrierten, nicht dynamisch bewegten Bearbeitungslaserstrahls modifiziert. Die weiteren für die erste Anwendung genannten Vorteile gelten für die zweite Anwendung entsprechend. Die Anwendungen der Bearbeitungsvorrichtung 100 des ersten Beispiels lassen sich wie folgt zusammenfassen:
Da die Laserstrahlführungseinrichtung 22 wie oben beschrieben als Zoom-Optik eingesetzt wird, wird der Bearbeitungslaserstrahl 15 vom Segmentspiegel mit der gewünschten wählbaren Strahldivergenz umgelenkt. Die Fokussierlinse der optischen Einheit 20 ist durch Verschieben in eine wählbare adäquate Linsenposition gebracht, so dass der Fokus des Bearbeitungslaserstrahls in der Bearbeitungszone 13 zu liegen kommt. Je divergenter der Laserstrahl vom Segmentspiegel umgelenkt wird, desto kleiner ist der Strahlfokusdurchmesser auf dem Werkstück 12.

Wird die Laserstrahlführungseinrichtung 22 gleichzeitig mit der Zoomfunktion als statische Strahlformungsoptik eingesetzt, nimmt die Oberfläche 24 des Segmentspiegels je nach gewünschter Aberration eine adäquate ansteuerbare Oberflächenkrümmung an. Je mehr Aktuatoren den Segmentspiegel betreiben, umso beliebiger kann die Oberfläche ausfallen. Auch hier sorgt die richtige Lage der Fokussierlinse dafür, dass der Brennpunkt (Fokus) des Bearbeitungslaserstrahls 15 auf dem Werkstück 12 zu liegen kommt.

Wird die Laserstrahlführungseinrichtung 22 gleichzeitig mit der Zoomfunktion für eine dynamische Strahlformung eingesetzt, so wird die Oberfläche 24 des Segmentspiegels mit einer genügend hohen Frequenz über 10 Hz, insbesondere über 100 Hz, derart verändert, dass der resultierende Fokus auf dem Werkstück 12 die gewünschte Bewegung zumindest lateral zur Laserstrahlausbreitung vornimmt. Solche Bewegungen sind beliebig gestaltbar, z.B. können alle möglichen Lissajous-Figuren auf dem Werkstück geschrieben werden, und das Strahlparameterprodukt des zeitlich integrierten Bearbeitungslaserstrahls wird modifiziert. Auch hier sorgt die richtige Lage der Fokussierlinse der optischen Einheit 20 dafür, dass der Brennpunkt des Bearbeitungslaserstrahls mit dem durch die dynamische Strahlformung modifizierten Strahlparameterprodukt auf dem Werkstück 12 zu liegen kommt.

In der ersten Anwendung wie auch in der zweiten Anwendung wird wie vorstehend beschrieben ein Betriebsmodus realisiert, in dem durch die Verstellung der Segmente der reflektierenden Oberfläche die Brennweite des optischen Systems und das Strahlparameterprodukt des zeitlich integrierten Bearbeitungslaserstrahls modifiziert werden. In zusätzlichen Betriebsmodi wird bei der ersten und/oder zweiten Anwendung durch die Verstellung der Spiegelsegmente entweder nur die Brennweite des optischen Systems oder nur das Strahlparameterprodukt des zeitlich integrierten Bearbeitungslaserstrahls modifiziert. Bei einem weiteren zusätzlichen Betriebsmodus werden die Segmente derart verstellt, dass der Bearbeitungsstrahl ohne Modifikation der Brennweite des optischen Systems und des Strahlparameterprodukts umgelenkt wird.

In einer Modifikation des ersten Beispiels weist die Laserstrahlführungseinrichtung 22 einen verformbaren Spiegel (DM, Dynamic Mirror) auf, um eine bewegliche, reflektierende, kontinuierliche Oberfläche 24 bereitzustellen. Der Spiegel wird durch eine Membran aus verformbaren Material gebildet, die mittels der Bewegungseinheit 25 dynamisch verformbar ist. Die Membran ist im vorliegenden Beispiel kreisförmig mit einem Durchmesser von ca. 45 mm. Die Bewegungseinheit 25 besteht aus individuell ansteuerbaren, auf der Unterseite der Membran in einem Kreismuster gleichmäßig verteilten Piezo-Aktuatoren. In diesem Beispiel handelt es sich um Piezo-Aktuatoren auf Basis einer modifizierten PZT(Blei-Zirkonat-Titanat)-Keramik mit einer typischen Betriebsspannung von 120V. Im vorliegenden Beispiel sind 32 Piezo-Aktuatoren in der Bewegungseinheit 25 vorgesehen, mit denen 32 einzelne flächige Bereiche der Membran individuell verstellbar sind. Die Oberseite der Membran ist mit einer hochreflektierenden dielektrischen Multilagen-Beschichtung, die Kupfer enthält, versehen. Die so bereitgestellte verformbare, reflektierende und kontinuierliche Oberfläche ist für Laserstrahlen bis 120 kW bei einer Wellenlänge von 1060 bis 1090 nm geeignet.

Alternativ kann als verformbarer Spiegel ein bimorph deformierbarer Spiegel, ein auf MEMS(Micro Electro Mechanical System)-Oszillator-Basis oder MOEMS(Micro Optical Eletro Mechanical System)-Oszillator-Basis deformierbarer Spiegel oder ein auf Schwingspulen-Basis deformierbarer Spiegel vorgesehen sein. Der bimorph deformierbare Spiegel besitzt beispielsweise eine dünne Glasplatte, die mit einer aus zwei unterschiedlich polarisierten Piezolagen bestehenden Piezokeramikplatte verbunden ist. An den Ecken sind die Platten derart gehalten, dass sie mit Resonanzeigenschaften versehen sind. Die Verbindung zwischen Glas- und Piezoplatte enthält eine elektrisch leitfähige Elektrode und die Rückseite der Piezoplatte ist mit individuellen Steuerelektroden versehen. Im Betrieb werden Spannungen an die Steuerelektroden gelegt, die in der Piezoplatte seitwärts gerichtete Kräfte erzeugen, wodurch der Spiegel verbogen wird. Bei dem auf MEMS- oder MOEMS-Basis deformierbaren Spiegel wird beispielsweise eine kontinuierliche, im nicht verformten Zustand flächige, bewegliche Elektrode, die an ihrer dem Bearbeitungslaserstrahl 15 exponierten Oberfläche für diesen reflektierend ist, mittels Aktuatoren einer parallel angeordneten weiteren flächigen Elektrode über elektrostatische Kräfte bewegt. Bei dem auf Schwingspulen-Basis deformierbaren Spiegel werden als Aktuatoren Schwingspulen eingesetzt, die eine dicke Basisplattform mit einer relativ dünnen und verformbaren Glasplatte verbinden. Zwischen Glasplatte und Basisplattform befindet sich eine Referenzplatte, in die Löcher eingelassen sind. Darin sind die Spulen-Aktuatoren vorgesehen. Ein durch Stromdurchfluss entstehendes magnetisches Wechselfeld lenkt die Spulen-Aktuatoren aus. Diese bewegen die daran befestigte Glasplatte.

Die bewegliche, reflektierende, kontinuierliche Oberfläche 24 des verformbaren Spiegels (DM, Dynamic Mirror) der oben erläuterten Modifikation kann analog wie der zuvor beschriebenen Segmentspiegel des ersten Beispiels betrieben werden. Damit ermöglicht auch die Modifikation des ersten Beispiels sowohl eine statische als auch eine dynamische Bewegung und Formung des Bearbeitungslaserstrahls sowie eine Verstellung der Brennweite des optischen Systems. Daher können analog die gleichen Anwendungen und Betriebsmodi wie für das erste Beispiel erläutert durchgeführt werden und die gleichen Vorteile können erzielt werden. Insbesondere können mittels der Laserstrahlführungseinrichtung 22 die Brennweite des optischen Systems und/oder das Strahlparameterprodukt des zeitlich integrierten Bearbeitungslaserstrahls modifiziert werden.

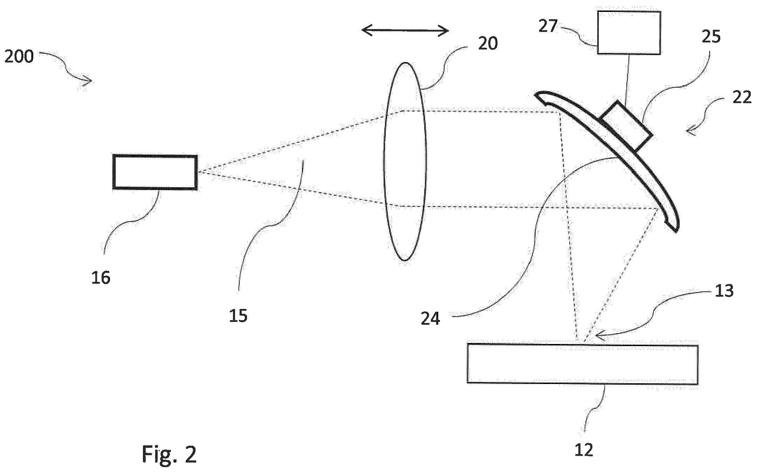

Fig. 2 zeigt eine beispielhafte Abwandlung der Bearbeitungsvorrichtung der Fig. 1. Es werden daher in der diesbezüglichen Figurenbeschreibung die Unterschiede zum Beispiel der Fig. 1 erläutert. Das Gehäuse mit der Schnittstelle 14 und der Austrittsöffnung 18 ist in Fig. 2 nicht dargestellt.

Fig. 2 veranschaulicht schematisch eine Bearbeitungsvorrichtung 200 zur Laserbearbeitung eines Werkstücks als ein zweites Beispiel gemäß Ausführungsformen der Erfindung. Im Beispiel der Fig. 2 ist die optische Einheit 20 für den Bearbeitungslaserstrahl 15 transmissiv und im Bereich zwischen der Schnittstelle 14 und der Laserstrahlführungseinrichtung 22 angeordnet. Die optische Einheit 20 ist als Kollimationslinse ausgeführt, die in Ausbreitungsrichtung des Bearbeitungslaserstrahls 15 verschiebbar ist, wie in Fig. 2 durch den Doppelpfeil angezeigt ist. Durch Verschieben der Kollimationslinse kann mit der optischen Einheit 20 die Brennweite des optischen Systems eingestellt werden. Die Krümmung der beweglichen Oberfläche 24 des Segmentspiegels der Laserstrahlführungseinrichtung 22 kann zudem derart verstellt werden, dass der Fokus des Bearbeitungslaserstrahls 15 parallel zur Ausbreitungsrichtung verschoben wird. Hier übernimmt also die Laserstrahlführungseinrichtung 22 eine Fokussierfunktion.

Die weiteren Merkmale, die Funktionsweisen und die Vorteile des zweiten Beispiels gemäß Fig. 2 entsprechen denjenigen des Beispiels der Fig. 1. Auch die oben erläuterte Modifikation des ersten Beispiels, in der anstelle des Segmentspiegels der verformbare Spiegel mit beweglicher reflektierender kontinuierlicher Oberfläche vorgesehen ist, kann analog für das zweite Beispiel realisiert werden. Im Betrieb fällt je nach Lage der Kollimationslinse der optischen Einrichtung 20 die Vergrösserung des auf dem Werkstück abgebildeten Bearbeitungslaserstrahls 15 unterschiedlich aus. Der Segmentspiegel oder der verformbare Spiegel der Laserstrahlführungseinrichtung 22 bewirkt mit seiner beliebig wählbaren und/oder variierbaren Krümmung der beweglichen Oberfläche, dass der Bearbeitungslaserstrahl 15 in einem Betriebsmodus gebündelt und mit seinem Fokus auf das Werkstück 12 gerichtet wird, und dabei zusätzlich die oben beschriebene statische oder dynamische Strahlformung vorgenommen wird. Auch die oben beschriebenen zusätzlichen Betriebsmodi können analog umgesetzt werden.

In Fig. 2 ist zudem veranschaulicht, dass die Bewegungseinrichtung 25 mit einer Steuerungseinheit 27 drahtgebunden oder drahtlos datenleitend verbunden sein kann, um die Bewegungseinrichtung 25 zu steuern. Beispielsweise können in einer Datenbank der Steuerungseinheit 27 Lissajous-Figuren gespeichert sein, und die Steuerungseinheit kann die Bewegungseinrichtung bzw. die einzelnen Aktuatoren entsprechend ansteuern. Auch in den Bearbeitungsvorrichtungen 100, 300 und 400 der Fig. 1, 3 und 4 sowie in deren Modifikationen und Abwandlungen kann eine derartige Steuerungseinheit 27 vorgesehen sein.

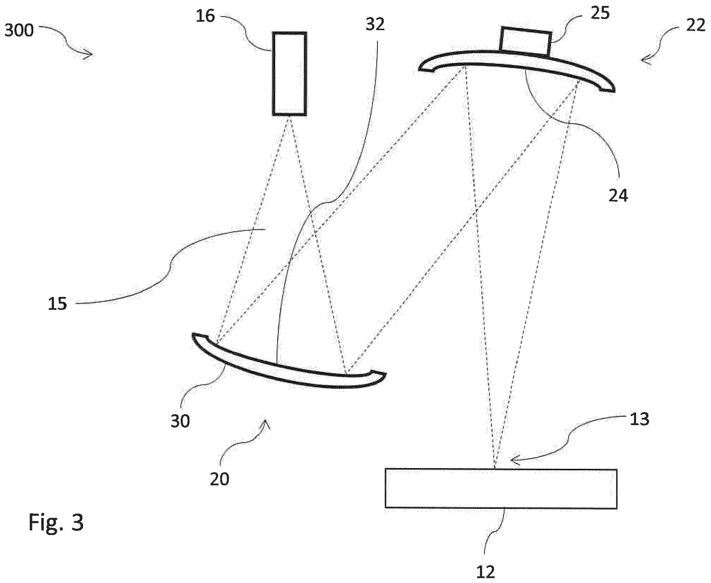

Fig. 3 stellt schematisch eine Bearbeitungsvorrichtung 300 zur Laserbearbeitung eines Werkstücks als ein drittes Beispiel gemäß Ausführungsformen der Erfindung dar. Fig. 3 zeigt eine beispielhafte Abwandlung der Bearbeitungsvorrichtung der Fig. 2. Es werden daher in der diesbezüglichen Figurenbeschreibung die Unterschiede zum Beispiel der Fig. 2 erläutert. Das Gehäuse mit der Schnittstelle 14 und der Austrittsöffnung 18 ist in Fig. 3 nicht dargestellt.

Im Unterschied zum Beispiel der Fig. 2 ist bei der Bearbeitungsvorrichtung 300 die optische Einheit 20 reflektiv ausgebildet. Anstelle der Kollimationslinse 20 ist ein ortsfester, einfacher adaptiver Spiegel 30 vorgesehen, dessen reflektierende Oberfläche derart beweglich und verstellbar ist, dass sein Krümmungsradius verändert wird. Dadurch wird der Strahlengang des Bearbeitungsstrahls 15 wie in Fig. 3 gezeigt verändert. Die Bearbeitungsvorrichtung 300 ist somit derart ausgebildet, dass der Bearbeitungslaserstrahl 15 mindestens zweimal reflektiert und dabei mindestens zweimal umgelenkt wird, bis er auf das Werkstück 12 trifft. Der einfache adaptive Spiegel 30 ist im vorliegenden Beispiel ein Hochleistungslaserspiegel, dessen reflektierende bewegliche Oberfläche 32 als Membran ausgebildet ist, die sich durch Druckveränderung in einem Fluid auf der Rückseite der Membran kontrolliert deformieren lässt. Die reflektierende Oberfläche 32 des einfachen adaptiven Spiegels 30 ist nicht dynamisch und/oder nicht hochfrequent beweglich oder verformbar. Im Betrieb wird bei der Umlenkung am Spiegel 30 der Bearbeitungslaserstrahl 15 kollimiert und auf die Laserstrahlführungseinrichtung 22 abgelenkt. Letztere formt den Bearbeitungslaserstrahl 15 statisch oder dynamisch und fokussiert ihn auf das Werkstück 12. Dieses Ausführungsbeispiel hat den Vorteil, dass es keine parallel zur Ausbreitungsrichtung des Bearbeitungslaserstrahls 15 bewegbaren und bewegten Optiken gibt. Lediglich die Spiegel werden für eine Fokusveränderung entsprechend verformt.

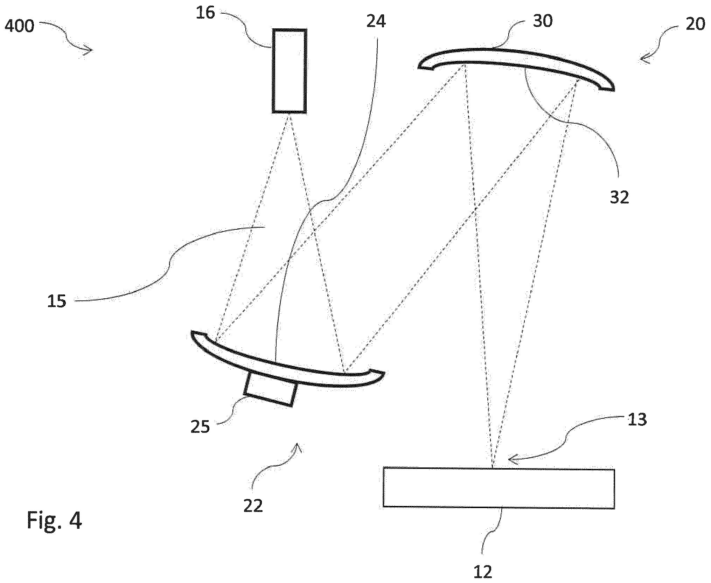

Fig. 4 stellt schematisch eine Bearbeitungsvorrichtung 400 zur Laserbearbeitung eines Werkstücks als ein viertes Beispiel gemäß Ausführungsformen der Erfindung dar. Fig. 4 zeigt eine beispielhafte Abwandlung der Bearbeitungsvorrichtung der Fig. 1. Es werden daher in der diesbezüglichen Figurenbeschreibung die Unterschiede zum Beispiel der Fig. 1 erläutert. Das Gehäuse mit der Schnittstelle 14 und der Austrittsöffnung 18 ist in Fig. 4 nicht dargestellt.

Im Unterschied zum Beispiel der Fig. 1 ist bei der Bearbeitungsvorrichtung 400 die optische Einheit 20 reflektiv ausgebildet. In der Bearbeitungsvorrichtung 400 ist ausgehend von der Bearbeitungsvorrichtung 100 der Fig. 1 anstelle der Fokussierlinse 20 der oben beschriebene ortsfeste, einfache adaptive Spiegel 30 vorgesehen. Der Strahlengang des Bearbeitungslaserstrahls 15 ist derart konfiguriert, dass der Bearbeitungslaserstrahl 15 mindestens zweimal reflektiert und dabei mindestens zweimal umgelenkt wird. Im Betrieb trifft der Bearbeitungslaserstrahl 15 zunächst auf die Laserstrahlführungseinrichtung 22 auf und wird von dieser kollimiert und statisch oder dynamisch geformt. Gleichzeitig wird der Bearbeitungslaserstrahl 15 von der Laserstrahlführungseinrichtung 22 auf den adaptiven Spiegel 30 abgelenkt. Dort wird der Bearbeitungslaserstrahl 15 fokussiert und auf das Werkstück 12 abgelenkt. Auch in diesem Beispiel sind keine parallel zur Ausbreitungsrichtung des Bearbeitungslaserstrahls 15 bewegbaren und bewegten Optiken vorgesehen. Es werden lediglich die Spiegel für eine Fokusveränderung entsprechend verformt.

In den vorstehenden, unter Bezug auf Fig. 3 und 4 erläuterten Beispielen kann statt dem einfachen adaptiven Spiegel 30 eine weitere Laserstrahlführungseinrichtung 22 vorgesehen sein. Auch mit den Beispielen der Fig. 3 und 4 können die oben beschriebenen zusätzlichen Betriebsmodi realisiert werden.

Bei allen Beispielen und Ausführungsformen können im optischen System zusätzliche transmissive optische Elemente (z.B. Linsen) und/oder zusätzliche reflektive optische Elemente (z.B. plane Spiegel) vorgesehen sein, beispielsweise zur Ablenkung des Bearbeitungslaserstrahls 15.

Alle Ausführungsformen der Bearbeitungsvorrichtung ermöglichen mit einem einzigen Bauteil, nämlich mit der Laserstrahlführungseinrichtung 22, eine Modifizierung des Strahlparameterprodukts des Bearbeitungslaserstrahls 15 und eine Modifizierung der Brennweite des optischen Systems. Die Modifizierung des Strahlparameterprodukts erfolgt mit statischer oder dynamischer Strahlformung des Bearbeitungslaserstrahls 15, wodurch vorteilhafte Intensitätsverteilungen und Leistungsverteilungen seines Strahlspots bereitgestellt werden können.

Mit der Bearbeitungsvorrichtung von Beispielen und Ausführungsformen kann ein Betriebsmodus realisiert werden, bei dem die Brennweite des optischen Systems und/oder das Strahlparamctcrprodukt des Bearbeitungslaserstrahls verändert werden. Dafür ist die mindestens eine bewegliche Oberfläche derart verstellbar, dass sie die Brennweite des optischen Systems und/oder das Strahlparameterprodukt des zeitlich integrierten Bearbeitungslaserstrahls modifiziert. In zusätzlichen Betriebsmodi von Beispielen und Ausführungsformen der Bearbeitungsvorrichtung ist die mindestens eine bewegliche Oberfläche derart verstellbar, dass sie die Brennweite des optischen Systems oder das Strahlparameterprodukt des zeitlich integrierten Bearbeitungslaserstrahls modifiziert. Für einen weiteren zusätzlichen Betriebsmodus ist die mindestens eine bewegliche Oberfläche derart verstellbar, dass sie weder die Brennweite noch das Strahlparameterprodukt des zeitlich integrierten Bearbeitungslaserstrahls modifiziert.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Laserbearbeitungsanlagen angewendet werden kann, sondern auch für andere Laser umfassende Geräte. Des Weiteren können die Bauteile der Bearbeitungsvorrichtung zur Laserbearbeitung von Werkstücken auf mehrere physikalische Produkte verteilt realisiert werden.

### Bezugszeichenliste

- 12: Werkstück
- 13: Bearbeitungszone
- 14: erste Schnittstelle
- 15: Bearbeitungslaserstrahl
- 16: Bearbeitungslaserquelle
- 18: Austrittsöffnung
- 20: optische Einheit
- 22: Laserstrahlführungseinrichtung
- 24: reflektierende Oberfläche
- 25: Bewegungseinrichtung
- 27: Steuerungseinrichtung
- 30: einfacher adaptiver Spiegel
- 32: reflektierende Oberfläche
- 100: Bearbeitungsvorrichtung
- 200: Bearbeitungsvorrichtung
- 300: Bearbeitungsvorrichtung
- 400: Bearbeitungsvorrichtung

## Patentansprüche

1. Bearbeitungsvorrichtung zur Laserbearbeitung eines Werkstücks (12) in einer Bearbeitungszone (13), insbesondere zum Laserschneiden, insbesondere Laserbearbeitungskopf, mit
einer Schnittstelle (14) für eine Bearbeitungslaserquelle (16) zum Erzeugen eines Bearbeitungslaserstrahls (15) mit einer Ausbreitungsrichtung;
einer Austrittsöffnung (18) für den Bearbeitungslaserstrahl; und
einem optischen System zwischen der Schnittstelle und der Austrittsöffnung,
wobei das optische System aufweist:
mindestens eine die Brennweite des optischen Systems einstellende optische Einheit (20), und
mindestens eine ortsfeste Laserstrahlführungseinrichtung (22) mit mindestens einer beweglichen Oberfläche (24), wobei die mindestens eine bewegliche Oberfläche derart verstellbar ist, dass sie in mindestens einem Betriebsmodus die Brennweite des optischen Systems und/oder das Strahlparameterprodukt des zeitlich integrierten Bearbeitungslaserstrahls modifiziert.

2. Bearbeitungsvorrichtung nach einem der vorstehenden Ansprüche,
wobei die mindestens eine bewegliche Oberfläche mittels mindestens einer Bewegungseinrichtung (25) verstellbar ist;
und/oder
wobei die mindestens eine bewegliche Oberfläche eine Oberflächeneinheit der Laserstrahlführungseinrichtung bereitstellt, deren Oberflächengeometrie, insbesondere
deren Krümmung, verstellbar ist; und/oder
wobei die mindestens eine bewegliche Oberfläche dynamisch verstellbar ist.

3. Bearbeitungsvorrichtung nach einem der vorstehenden Ansprüche,
wobei die Laserstrahlführungseinrichtung eine Mehrzahl von dynamisch orientierbaren Oberflächen aufweist; und/oder
wobei die Laserstrahlführungseinrichtung eine kontinuierliche Oberfläche aufweist, die dynamisch verformbar ist.

4. Bearbeitungsvorrichtung nach einem der vorstehenden Ansprüche,
wobei die Laserstrahlführungseinrichtung mindestens einen Segmentspiegel mit mehreren Spiegelsegmenten, die jeweils orientierbar sind, aufweist; und/oder
wobei die Laserstrahlführungseinrichtung mindestens einen verformbaren Spiegel aufweist.

5. Bearbeitungsvorrichtung nach einem der vorstehenden Ansprüche,
wobei die Laserstrahlführungseinrichtung mindestens ein Element ausgewählt aus einem mit mindestens einem Piezo-Aktuator verstellbaren Spiegel, einem bimorph deformierbaren Spiegel, einem auf MEMS-Basis deformierbaren Spiegel und einem auf Schwingspulen-Basis deformierbaren Spiegel aufweist.

6. Bearbeitungsvorrichtung nach einem der vorstehenden Ansprüche,
wobei die Laserstrahlführungseinrichtung, insbesondere die mindestens eine bewegliche Oberfläche, derart angeordnet und ausgebildet ist, dass der Bearbeitungslaserstrahl in einem Winkel kleiner, gleich oder größer 90° umgelenkt wird.

7. Bearbeitungsvorrichtung nach einem der Ansprüche 2 bis 6,
wobei die Bewegungseinrichtung (25) mindestens ein Element ausgewählt aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einer Mehrzahl davon und/oder einer Kombination davon aufweist.

8. Bearbeitungsvorrichtung nach einem der vorstehenden Ansprüche,
wobei die optische Einheit (20) ausgewählt ist aus einer Linse, einer Fokussierlinse, einer Kollimationslinse, einer weiteren der mindestens einen Laserstrahlführungseinrichtung (22), einem adaptiven Spiegel (30), einer Mehrzahl davon und/oder einer Kombination davon; und/oder wobei die optische Einheit parallel zur Ausbreitungsrichtung verschiebbar ist oder ortsfest ist; und/oder wobei die optische Einheit in Ausbreitungsrichtung vor und/oder hinter der Laserstrahlführungseinrichtung angeordnet ist.

9. Bearbeitungsvorrichtung nach Anspruch 8,
wobei die Fokussierlinse in Ausbreitungsrichtung hinter der Laserstrahlführungseinrichtung angeordnet ist; und/oder
wobei die Kollimationslinse in Ausbreitungsrichtung vor der Laserstrahlführungseinrichtung angeordnet ist.

10. Bearbeitungsvorrichtung nach einem der vorstehenden Ansprüche,
wobei die Schnittstelle (14) mit einer Bearbeitungslaserquelle (16) zum Erzeugen des Bearbeitungslaserstrahls (15) verbunden oder versehen ist; und/oder wobei eine Steuerungseinheit (27) zum Steuern der optischen Einheit und/oder der Laserstrahlführungseinrichtung, insbesondere der Bewegungseinrichtung, vorgesehen ist.

11. Bearbeitungsvorrichtung nach einem der vorstehenden Ansprüche,
wobei die Bearbeitungslaserquelle eine Laserleistung von mindestens 1 kW, bevorzugt mindestens 4 kW, bevorzugter zwischen 1 bis 30 kW, am meisten bevorzugt zwischen 1 bis 25 kW, bereitstellt.

12. Bearbeitungsvorrichtung nach einem der vorstehenden Ansprüche,
wobei die mindesten eine bewegliche Oberfläche mit einer Frequenz zwischen 10 Hz und 15 kHz, bevorzugt zwischen 100 Hz und 10 kHz, verstellbar ist; und/oder wobei die mindestens eine bewegliche Oberfläche derart verstellbar ist, dass sie den Bearbeitungslaserstrahl zumindest senkrecht zur Ausbreitungsrichtung dynamisch bewegt; und/oder
wobei die mindestens eine bewegliche Oberfläche derart verstellbar ist, dass sie den Bearbeitungslaserstrahl dynamisch bewegt und mindestens eine Fokalpunkt-Oszillation mit mindestens einer Schwingungsamplitude und mindestens einer Schwingungsfrequenz und mit einem Fokalpunkt-Oszillationsweg erzeugt, der einer zwei- oder drei-dimensionalen Lissajous-Figur oder einer Kombination
von zwei- oder drei-dimensionalen Lissajous-Figuren entspricht.

13. Verwendung einer Bearbeitungsvorrichtung nach einem der vorstehenden Ansprüche zur Laserbearbeitung eines Werkstücks, insbesondere zum Laserschneiden.

14. Verfahren zur Laserbearbeitung eines Werkstücks mit einer Bearbeitungsvorrichtung nach einem der Ansprüche 1 bis 12, insbesondere zum Laserschneiden, umfassend:
Bestrahlen einer Bearbeitungszone (13) eines Werkstücks (12) mit einem Bearbeitungslaserstrahl (15) aus einer Bearbeitungslaserquelle (16), die an der Schnittstelle (14) der Bearbeitungsvorrichtung (100; 200; 300; 400) vorgesehen ist, durch die Austrittsöffnung (18) der Bearbeitungsvorrichtung; und
Modifizieren der Brennweite des optischen Systems und/oder des Strahlparameterprodukts des zeitlich integrierten Bearbeitungslaserstrahls mittels der Laserstrahlführungseinrichtung (22), die mindestens eine bewegliche Oberfläche (24) aufweist.

15. Verfahren nach Anspruch 14,
wobei die Laserstrahlführungseinrichtung, insbesondere die mindestens eine bewegliche Oberfläche, zum Modifizieren des Strahlparameterprodukts den Bearbeitungslaserstrahl zumindest senkrecht zur Ausbreitungsrichtung dynamisch bewegt; und/oder wobei die Laserstrahlführungseinrichtung, insbesondere die mindestens eine bewegliche Oberfläche, zum Modifizieren des Strahlparameterprodukts den Bearbeitungslaserstrahl dynamisch bewegt und mindestens eine Fokalpunkt-Oszillation mit mindestens einer Schwingungsamplitude und mindestens einer Schwingungsfrequenz und mit einem Fokalpunkt-Oszillationsweg erzeugt, der einer zwei- oder drei-dimensionalen Lissajous-Figur oder einer Kombination von zwei- oder drei-dimensionalen Lissajous-Figuren entspricht.
